(19) Europäisches Patentamt
European Patent Office
Office européen des brevets

(11) **EP 4 144 474 B1**

(12) **EUROPÄISCHE PATENTSCHRIFT**

(45) Veröffentlichungstag und Bekanntmachung des Hinweises auf die Patenterteilung:
**28.08.2024  Patentblatt 2024/35**

(21) Anmeldenummer: **21194733.8**

(22) Anmeldetag: **03.09.2021**

(51) Internationale Patentklassifikation (IPC):
**B23K 26/046** $^{(2014.01)}$    **B23K 26/06** $^{(2014.01)}$
**B23K 26/364** $^{(2014.01)}$    **B23K 26/38** $^{(2014.01)}$
**B23K 26/382** $^{(2014.01)}$

(52) Gemeinsame Patentklassifikation (CPC):
**B23K 26/046; B23K 26/0643; B23K 26/364;
B23K 26/38; B23K 26/382**

(54) **VERFAHREN, VORRICHTUNG UND SYSTEM ZUR DYNAMISCHEN ANPASSUNG DES FOKUSDURCHMESSERS EINER LASERSCHNEIDANLAGE**

METHOD, APPARATUS AND SYSTEM FOR DYNAMICALLY ADJUSTING FOCUS DIAMETER OF A LASER CUTTING APPARATUS

PROCÉDÉ, DISPOSITIF ET SYSTÈME D'AJUSTEMENT DYNAMIQUE DU DIAMÈTRE FOCAL D'UNE INSTALLATION DE COUPE LASER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**08.03.2023  Patentblatt 2023/10**

(73) Patentinhaber: **Bystronic Laser AG**
**3362 Niederönz (CH)**

(72) Erfinder:
• **HELD, Michael**
  **3412 Heimiswil (CH)**
• **HAAS, Titus**
  **4800 Zofingen (CH)**
• **LÜDI, Andreas**
  **3400 Burgdorf (CH)**
• **SCHEIDIGER, Simon**
  **4900 Langenthal (CH)**
• **INGOLD, Elio**
  **3362 Niederönz (CH)**

(74) Vertreter: **Schwarz, Claudia**
**Schwarz + Kollegen**
**Patentanwälte**
**Heilmannstraße 19**
**81479 München (DE)**

(56) Entgegenhaltungen:
EP-A1- 3 747 588      US-A1- 2002 017 512
US-A1- 2016 096 239   US-A1- 2019 232 434

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung liegt auf dem Gebiet der Lasertechnologie und betrifft insbesondere ein Verfahren zur dynamischen Anpassung eines Fokusdurchmessers eines Laserstrahls, der von einem Laserbearbeitungskopf einer Laserschneidmaschine emittiert wird, ein Anpassungsmodul, ein Computerprogram und ein System.

Damit Werkstücke, wie z.B. Blechteile, optimal mit einem Laser geschnitten werden können, müssen die Prozessparameter wie Vorschub, Schneidgasströmung, Schneidgasart, Fokuslage des Lasers, Durchmesser des Laserstrahls, Intensitätsverteilung des Laserstrahls, Laserstrahlqualität, Laserleistung, etc. möglichst ideal bestimmt werden. Einschränkend kann sein, dass einige Parameter nicht gänzlich frei gewählt werden können. So kann z.B. die maximal verfügbare Laserleistung, die mögliche Strahlqualität etc. beschränkt und/oder vom Maschinensystem vorgegeben sein. Eine andere Schwierigkeit der Parameterwahl ist, dass nicht für alle auf einem Schneidplan vorkommenden Konturen die gleiche Parameterkombination optimal ist. Sind die Konturen z.B. kleinräumig und/oder eckig, so wird idealerweise die Laserleistung kleiner gewählt und/oder der Vorschub kann aufgrund der beschränkten/limitierten Dynamik (Beschleunigung und/oder Ruck) kleiner sein. Auch andere Größen, wie die Fokuslage, sollten in kleinen Konturen und Ecken gegenüber den Geradeausschnitten verändert werden.

Ähnlich verhält es sich in anderen Prozessregimes wie dem Einstechen und dem Gravieren. Auch beim Einstechen wird typischerweise nur primär die Laserleistung bzw. die Pulsenergie sowie die Fokuslage bzw. der Düsenabstand während des Prozesses dynamisch angepasst. Arbeiten dazu sind bekannt, vgl. die Publikation «Influence of Process Parameters in Laser Piercing», August 2019, Applied Sciences 9(16):3231. Insbesondere der Fokusdurchmesser hingegen bleibt typischerweise unverändert.

Das Dokument EP 3 747 588 A1 beschreibt eine Bearbeitungsvorrichtung zur Laserbearbeitung eines Werkstücks. Die Bearbeitungsvorrichtung umfasst mindestens eine bewegliche Oberfläche, die derart verstellbar ist, dass die Brennweite und/oder das Strahlparameterprodukt des zeitlich integrierten Bearbeitungslaserstrahls modifizierbar sind.

Das Dokument US 2002/017512 A1 beschreibt ein Laserschneidesystem mit einer Rahmenkonstruktion, um den Laserschneidekopf zu bewegen. Ein Teleskopsystem ermöglicht, eine Dichte und Leistung des Laserstrahls durch Auto-Fokussierung konstant zu halten für alle Teilbereiche eines Werkstücks.

Das Dokument US 2016/096239 A1 beschreibt das Durchstechen eines Werkstücks mittels eines Laserstrahls. Zunächst wird ein nicht-durchgängiges Loch unter Benutzung eines inerten Gases. Das nicht-durchgängige Loch wird unter Verwendung von Sauerstoff zu einem Trichter vergrößert und anschließend der Boden des Trichters bis zum Durchgang des Lochs durchstochen.

Das Dokument US2019/232434 A1, offenbarend die Merkmale des Oberbegriffes der Ansprüche 1 und 15, beschreibt ein Verfahren zur Bestimmung einer Fokuslage (Fokusposition) eines Bearbeitungsstrahls, insbesondere eines Laserstahls. Mittels eines räumlich aufgelösten Bilds wird eine Spaltbreite an der Oberfläche eines bearbeiteten Werkstücks bestimmt.

Heutzutage sind die oben erwähnten Anpassungen im Vorschub und der Laserleistung die gängigen dynamischen Parameteranpassungen sowohl beim Laserschneiden, Einstechen wie auch beim Gravieren.

Andere Prozessparameter, wie insbesondere der Fokusdurchmesser, werden heute nicht dynamisch angepasst. Grund ist, dass zum einen die Maschine bzw. der Laserkopf keine solchen Änderungen zulässt und zum anderen bisher kaum bekannt ist, was für Prozessvorteile damit verbunden sind.

Die Aufgabe der vorliegenden Erfindung ist es, die Möglichkeit eines dynamisch angepassten Fokusdurchmessers im Rahmen des Schneidprozesses vorzusehen. Des Weiteren soll die Qualität des Schneidprozesses verbessert werden.

Mit den heutigen im Stand der Technik bekannten Schneidsystemen wird jedoch typischerweise nur die Laserleistung, der Vorschub und/oder die Fokuslage im Prozess dynamisch angepasst. Die Folge davon ist, dass die Prozessparameter oft kompromissbehaftet sind. Bekannt ist zum Beispiel, dass Schneidparameter meistens einen Kompromiss zwischen Geradeausschnitt und Eckenschnitt darstellen. Sowohl geradeaus (mit hohem Vorschub) wie um die Ecke (mit kleinem Vorschub) soll die Schneidqualität hinreichend akzeptabel sein. Ein solcher Kompromissparameter kann oft nur gefunden werden, indem gewisse Abstriche in der Produktivität (aufgrund von Vorschubeinbußen im Geradeausschnitt), der Schneidqualität oder der Effizienz durch eine Erhöhung des Schneidgasvolumens zur Bekämpfung von unbefriedigenden Ecken/Radien hingenommen werden. Gleichermaßen gilt dies auch beispielsweise beim Einstechen. Könnte auch der Durchmesser des Laserstrahls auf Fokusebene dynamisch verändert werden, so könnte schneller und schöner eingestochen werden.

Diese Aufgabe wird durch die beiliegenden Patentansprüche gelöst, insbesondere durch ein computer-implementiertes Verfahren zur dynamischen Anpassung eines Fokusdurchmessers eines Laserstrahls, der aus einem Laserbearbeitungskopf einer Laserschneidmaschine austritt gemäß Anspruch 1, ein Anpassungsmodul gemäß Anspruch 15, ein Computerprogramm gemäß Anspruch 14 und ein System gemäß Anspruch 16.

In einem Aspekt betrifft die Erfindung ein computer-implementiertes Verfahren zur dynamischen Anpassung eines Fokusdurchmessers eines Laserstrahls eines Laserbearbeitungskopfes einer Laserschneidmaschine zum Bearbeiten von, insbesondere flächigen und/oder profilierten und/oder rohrförmigen, Werkstücken, siehe Anspruch 1.

Das Verfahren umfasst mindestens folgende Verfahrensschritte:

- Prüfen, ob ein vorkonfigurierbares Triggerereignis vorliegt, und bejahendenfalls:
- Ausführen einer Anpassungsfunktion f zur Anpassung des Fokusdurchmessers D während eines Bearbeitungsvorganges entlang einer Bahn, die der Laserbearbeitungskopf abfährt.

Der Fokusdurchmesser kann definiert werden als die Fläche, die von dem Laserstrahl auf der Werkstückoberfläche bestrahlt wird. Üblicherweise liegt der Fokusdurchmesser in einer Fokusebene, die sich im Wesentlichen orthogonal zur Ausbreitungsrichtung des Laserstrahls erstreckt. Der technische Effekt einer dynamischen Veränderung des Fokusdurchmessers ist, dass die Laserenergie auf unterschiedlich große Flächen verteilt werden kann, je nachdem, wie groß die vom Laserstrahl bestrichene Fläche des Werkstücks ist. Wenn in diesem Dokument von einem Laserstrahldurchmesser die Rede ist, dann ist immer derjenige Durchmesser des Laserstrahls gemeint, der in der Fokusebene liegt; diese Ebene kann mit der Werkstückoberflächenebene übereinstimmen, muss dies aber nicht, weil die Fokuslage auch quasi in das Werkstück hineingelegt werden kann.

Die Fokuslage kann mitunter auch dynamisch, während des Schneidvorgangs, veränderlich sein. Die Fokuslage kann mitunter durch optische Elemente im Strahlgang in x, y und/oder z-Richtung variiert werden.

Unter einer dynamischen Anpassung des Fokusdurchmessers ist insbesondere eine geschwindigkeitsabhängige und/oder beschleunigungsabhängige und/oder geometriebasierte und insbesondere krümmungsradiusabhängige Veränderung des Fokusdurchmessers zu verstehen. Die Anpassung des Fokusdurchmessers kann alternativ oder kumulativ auch durch andere Einflüsse, wie z.B. durch das Erfassen einer veränderten Schnittspaltbreite, ausgelöst werden.

Bei den Werkstücken kann es sich um vorzugsweise Werkstücke aus Metall, Kunststoff oder unterschiedlichen Materialgemischen, wie z.B. Legierungen handeln. Die Werkstücke können vorwiegend zweidimensional, also flächig sein, z.B. in Form von Blechen, oder rohrförmig oder es kann sich um Profile in unterschiedlichen Formaten handeln, wie z.B. Rechteckprofile, U- oder L-Profile oder auch um komplexe dreidimensionale Strukturen.

Das Triggerereignis kann in einer Konfigurationsphase durch entsprechende Eingaben in einem Konfigurationsfeld einer Benutzerschnittstelle konfiguriert werden. Das Triggerereignis kann zeit-basiert oder ereignis-basiert konfiguriert werden. Dazu stehen Konfigurationsmittel auf einer Benutzerschnittstelle, HMI (human machine interface), zur Verfügung.

Bei einer Schnittspaltbreitenabweichung kann beispielsweise Folgendes vorgesehen sein: Üblicherweise ist die Soll-Schnittspaltbreite vorgegeben. Eine Eingabe per HMI ist jedoch möglich, jedoch primär im Schneidparameter hinterlegt. Bei Abweichung um >X %, greift die Regelung ein. X ist parametrierbar, z.B. typischerweise 10%.

Bei einer geschwindigkeitsabhängigen Veränderung kann eine vorgeschlagene, in den Schneidparametern gespeicherte Funktion via HMI ausgeschaltet werden oder prozentual weniger stark gewichtet.

Die Anpassungsfunktion zur Anpassung des Fokusdurchmessers wird während eines Bearbeitungsvorganges ausgeführt. Vorzugsweise wird der Fokusdurchmesser während eines Bearbeitungsvorganges angepasst, also insbesondere während dem produktiven Schneiden bzw. Abarbeiten des Schneidplans.

In einer bevorzugten Ausführungsform der Erfindung kann als Triggerereignis ein Erfassen einer Veränderung der Schnittspaltbreite konfiguriert werden. Die Veränderung der Schnittspaltbreite kann automatisch detektiert werden. Dazu werden vorzugsweise zwei Optionen bereitgestellt.

In einer ersten Option kann das Erfassen einer Veränderung der Schnittspaltbreite direkt und sensorisch erfolgen. Hier wird der Schnittspalt durch geeignete Detektoren und insbesondere mit einem optischen Sensorsystem gemessen. Dies kann z.B. über optische in-process Detektoren, wie z.B. Dioden oder Kameras erfolgen. Der optische Sensor, z.B. in Form von zumindest einer Kamera, kann z.B. am Schneidkopf angeordnet sein kann und kontinuierlich den Schnittspalt während der Bearbeitung (insbesondere Schneiden) detektieren.

In einer zweiten Option wird der Schnittspalt bzw. dessen Veränderung indirekt berechnet oder geschätzt aus den verfügbaren Daten. So ist beispielsweise der folgende Zusammenhang bekannt, dass bei geringerem Vorschub, der Schnittspalt abnimmt. Da der Vorschub in bestimmten Bereichen der abzufahrenden Kontur verringert wird, kann in diesen Bereichen auch von einer geringeren Schnittspaltbreite ausgegangen werden. Dies trifft beispielsweise auf Anschnitt und/oder Endschnitt und/oder in Ecken und/oder (z.B. engen) Radien zu. Hier ist der Schnittspalt unerwünscht schmaler. Dieser funktionale Zusammenhang kann in einem ersten Speichermodul abgespeichert sein. Nachdem, z.B. aus den Vorgaben des Schneidplans, der trajektorie-spezifische Vorschub erfasst wurde, kann durch Zugriff auf dieses erste Speichermodul die Veränderung der Schnittspaltbreite entsprechend der Vorschubänderung für jeden Punkt der Trajektorie (die der Schneidkopf abfahren muss) ermittelt werden.

Der funktionale Zusammenhang der Schnittspaltbreite in Abhängigkeit des Vorschubes kann aus theoretischen Schneidmodellen abgeleitet werden, insb. aus dem Modell von M. Brügmann [Brügmann, M.H., Feurer, T., 2015, Theoretical Analysis of Laser Cutting of Metals at 1 and 10um wavelength. Asers Manuf. Conf. 2015 - 10.].

Offensichtlich ist der funktionale Zusammenhang ein monotoner und stetiger, welcher z.B. mit einer Potenzfunktion angenähert werden kann - für dieses Beispiel mit der Formel w=0.122·v$^{0.0353}$.

Diesem Effekt der unerwünschten Veränderung der Schnittspaltbreite soll entgegengewirkt werden. Demnach wird die Anpassungsfunktion so gewählt, dass durch den derart angepassten Fokusdurchmesser die erfasste Veränderung der Schnittspaltbreite kompensiert wird.

Dazu sei auf folgenden Funktionskatalog verwiesen:

Eingänge/Inputs:

$$x = \left[ v_c, F, A, \kappa, D, d_{z_0}, \Delta_{d_{z_0}}^{v_c}, \Delta_{d_{z_0}}^{A}, \Delta_{d_{z_0}}^{\kappa} \right]$$

- Steuerung / CNC Kernel

  - $v_c$: Commanded speed
  - $F$: desired cutting speed (also called feed rate)
  - $A$: Acceleration
  - $\kappa$: Curvature

- Schneidparameter/Cutting Parameters

  - D: Thickness of material
  - Standard dynamic cutting parameters

    - $z_0$: Focal position
    - $p_H$: Gas pressure
    - $P_L$: Laser power
    - $z_N$: Nozzle distance
    - $P_W$: Pulse width of laser
    - $P_F$: Pulse frequency of laser
    - $BPP$: Beam Parameter Product
    -

  - Optimal values at

    - Minimal commanded or acutal speed ($v_c$ = 0)

      - $\Delta_{d_{z_0}}^{v_c}$ maximal change of beam diameter for speed zero

    - Maximal acceleration

      - $\Delta_{d_{z_0}}^{A}$ : maximale Anpassung des Strahldurchmessers bei maximaler Beschleunigung

    - Maximaler Krümmung

      - $\Delta_{d_{z_0}}^{\kappa}$ : maximale Anpassung des Strahldurchmessers bei maximaler Krümmung
      - Krümmung ab welcher der Strahldurchmesser angepasst wird $\kappa_{min}$

  - Funktionen für die Anpassung des Strahldurchmessers $f^{d_{z_0}}(x)$ und deren Exponent $\varepsilon_{d_{z_0}}$ siehe unten bei "Funktionen".

Ausgänge/Outputs:

$$u^* = \left[ d_{z_0}^* \right]$$

- Bezüglich Eckenqualität optimierte Schneidparameter

  ○ $d^*_{z_0}$ : optimierter Strahldurchmesser

Funktionen

- Für jeden Output gibt es eine eigene Funktion, welche von den Inputs x abhängig ist

  ○ $d^*_{z_0} = f^{z0}(x)$ : optimierter Strahldurchmesser

- Funktionen können linear oder trigonometrisch sein

  ○ Beispielsweise für die geschwindigkeitsabhängige Anpassung des Strahldurchmessers mit Sinusfunktion als Basis und Exponent $\varepsilon_{z_0}$ = 2:

$$f^{d_{z_0}}(x) = \Delta^{v_c}_{d_{z_0}} \sin\left(\frac{F-v_c}{F}2\pi\right)^2 (v_c \leq F) \rightarrow d^*_{z_0} = d_{z_0} + f^{d_{z_0}}(x)$$

  ○ Beispielsweise für linear von der Beschleunigung abhängige Anpassung des Strahldurchmessers:

$$f^{d_{z_0}}(x) = \Delta^A_{d_{z_0}} ((A_{max} - A_{min}) - \|A\|)(0 \leq \|A\|)(\|A\| \leq A_{max})(A_{min} \leq$$

$$\|A\|) + \Delta^A_{d_{z_0}}(A_{max} \leq \|A\|)(A_{min} \leq \|A\|) \rightarrow d^*_{z_0} = d_{z_0} + f^{d_{z_0}}(x)$$ , wobei $A_{max}$: Beschleunigung, bis zu welcher die Änderungen angewendet werden sollen. Höhere Beschleunigungen führen zu keiner zusätzlichen Änderung. $A_{min}$: Beschleunigung, ab welcher die Änderungen angewendet werden sollen. Tiefere Beschleunigungen führen zu keiner zusätzlichen Anpassung. Beispiel mit

$$A_{max} = 4\frac{m}{s^2} \text{ und } A_{min} = 0.4\frac{m}{s^2}.$$

  ○ Beispielsweise für die beschleunigungsabhängige Anpassung des Strahldurchmessers mit Sinusfunktion als Basis und Exponent $\varepsilon_{z_0}$ = 4:

$$f^{d_{z_0}}(x) = \Delta^A_{d_{z_0}} \left(1 - \frac{sin(A_{max} - \|A\|)^4}{(A_{max} - A_{min})}\frac{\pi}{2}\right)(0 \leq \|A\|)(\|A\| \leq A_{max})(A_{min} \leq \|A\|) +$$

$$\Delta^A_{d_{z_0}}(A_{max} \leq \|A\|)(A_{min} \leq \|A\|) \rightarrow d^*_{z_0} = d_{z_0} + f^{d_{z_0}}(x)$$

Beispiel mit $A_{max} = 4\frac{m}{s^2}$ und $A_{min} = 2\frac{m}{s^2}$ .

  ○ Komplexere Funktionen und Kombinationen von geschwindigkeits-, beschleunigungs- und krümmungsabhängigen Anpassungen sind denkbar:

$$f^{d_{z_0}}(x) = \Delta^{v_c}_{d_{z_0}} \sin\left(\frac{F-v_c}{F}2\pi\right)^2 (v_c \leq F) + \Delta^\kappa_{d_{z_0}} \sin\left(\frac{F-v_c}{F}2\pi\right)^{12} (\kappa \geq \kappa_{min})$$

In einer bevorzugten Ausführungsform der Erfindung kann kumulativ oder alternativ zu den bereits genannten Konfigurationsmöglichkeiten als Triggerereignis ein Ausführen eines Anschnitts und insbesondere ein Einstechvorgang und/oder eines Endschnitts konfiguriert sein.

In einer bevorzugten Ausführungsform der Erfindung kann kumulativ oder alternativ zu den bereits genannten Konfigurationsmöglichkeiten als Triggerereignis das Ausführen eines Einstechprozesses konfiguriert sein, bei dem vor dem Einstechen eine Einstechfunktion h zur Vergrößerung des Fokusdurchmessers auf einen Wert ausgeführt wird, der in einem vorkonfigurierbaren Bereich liegt und dazu dient, eine Einstichstelle aufzuwärmen und anschließend für das Einstechen ein vordefinierbaren Einstech-Fokusdurchmesser angewendet wird. Kumulativ oder alternativ kann eine schrittweise Aufweitung des Einstichs angesteuert werden.

In einer bevorzugten Ausführungsform der Erfindung kann kumulativ oder alternativ zu den bereits genannten Konfigurationsmöglichkeiten als Triggerereignis das Ausführen eines Gravierprozesses konfiguriert sein, insbesondere eines flächigen Gravierprozesses, wobei für ein flächiges Gravieren der Fokusdurchmesser erhöht und bei feinen Gravuren der Fokusdurchmesser verringert wird.

In einer bevorzugten Ausführungsform der Erfindung kann kumulativ oder alternativ zu den bereits genannten Konfigurationsmöglichkeiten als Triggerereignis ein Mikrostegschweißen von geschnittenen Teilen konfiguriert sein. Bei Dünnblech bis ca. 4mm werden Mikrostege zum Abkippen der geschnittenen Teile eingesetzt. Dabei wird die Kontur nicht ganz fertig geschnitten, so dass ein kleiner Steg stehen bleibt. Im Dickblechbereich ab 4 mm würden Mikrostege das Herausbrechen des geschnittenen Teils erschweren oder verhindern. Deshalb setzt man in diesem Fall auf einen Schweisssteg (eine feine Punktschweißung) auf der geschnittenen Kontur. Es versteht sich von selbst, dass sich das Strahlwerkzeug, das gerade eben dazu genutzt wurde, das Material zu trennen sich schlecht dazu eignet, das Material wieder zu verbinden, weil der Fokusdurchmesser beim Schweißen grösser sein sollte. Durch die Anpassung des Fokusdurchmessers kann das Strahlwerkzeug für ein besseres Schweiß-Ergebnis angepasst werden.

In einer bevorzugten Ausführungsform der Erfindung kann kumulativ oder alternativ zu den bereits genannten Konfigurationsmöglichkeiten als Triggerereignis ein Erfassen von Konturfehlern und/oder eine Eintrittswahrscheinlichkeit von Konturfehlern konfiguriert sein. Damit wird der technische Effekt erzielt, dass nicht nur ein (z.B. sensorisches und manuell ermitteltes) Erfassen von Konturfehlern korrigiert wird, sondern auch bei einer Vorhersage bzw. einer Schätzung eines zukünftig auftretenden Konturfehlers eine Korrektur mittels dynamischer Fokusdurchmesser Anpassung erfolgt. Je breiter der Strahl, desto kleiner wird das Teil. Dies kann lokal so fein aufgelöst sein, dass Konturfehler im Mikrometerbereich kompensiert werden können. Die Vorhersage und/oder die Korrekturwerte (zur Anpassung des Fokusdurchmessers) können auch modellbasiert vorgegeben werden anstelle oder ergänzend zur Messung via Sensor. Das Modell kann ein ANN, insbesondere ein DNN umfassen.

Wie vorstehend erwähnt, kann das Triggerereignis gemäß unterschiedlichen Vorgaben (die üblicherweise vom Anwender über eine Benutzerschnittstelle eingegeben werden können) jeweils für einen spezifischen Anwendungsfall angepasst konfiguriert werden. Die unterschiedlichen Konfigurationsmöglichkeiten können einzelnen oder in Kombination zur Anwendung kommen.

Das erste und das zweite Speichermodul können separaten Instanzen vorgehalten werden, die über eine Schnittstelle mit dem Anpassungsmodul in Datenaustausch stehen. Dies hat den Vorteil, dass in den jeweiligen Speichermodulen gespeicherten Daten unabhängig voneinander geändert werden können und eine höhere Zuverlässigkeit bereitgestellt werden kann. In einer Weiterbildung der Erfindung kann es vorgesehen sein, dass auf dem ersten Speichermodul gespeicherten Daten zusätzlich und auf redundante Weise auch dem zweiten Speichermodul gespeichert werden, um bei Beschädigung des jeweiligen Speichermodul oder der Datenverbindung zum Anpassungsmodul einen fortlaufenden Betrieb des Anpassungsmoduls sicherstellen zu können. In einer alternativen Ausführungsform können das erste Speichermodul und das zweite Speichermodul auch in einer gemeinsamen Instanz implementiert sein. In dem ersten und/oder zweiten Speichermodul kann die Anpassungsfunktionen f, die Einstechfunktion h und/oder eine Zuordnung von gelernten Materialeigenschaften zu Schnittspaltbreiten gespeichert sein.

Ensprechend der Erfindung kann die Anpassungsfunktion f zur Anpassung des Fokusdurchmessers unabhängig von anderen Bearbeitungsparametern oder deren Veränderung ausgeführt werden. Dies ist insbesondere unabhängig von einer Wahl der Fokuslage möglich.

Damit wird eine freie Wahl der Fokuslage ermöglicht. Im Stand der Technik ist es bekannt, die Fokuslage zu variieren, um die Schnittspaltbreite zu verändern. Dies wirkt sich aber möglicherweise nachteilig auf die Qualitätsmerkmale des Schnittes (z.B. Rauheit, Grat, etc.) aus. Eine Entkoppelung (der Bestimmung) von Fokuslage und Fokusdurchmesser liefert hingegen konstantere Ergebnisse bei der Schneidqualität.

Bei einigen Schneidköpfen wird bei Veränderung der Magnifikation auch die Fokuslage leicht mitverändert (und vice versa). Dies kann eine leichte Verringerung der Performance (insbesondere der Schneidqualität) in den Ecken zur Folge haben. In einer bevorzugten Ausführungsform der Erfindung wird deshalb die Anpassungsfunktion gezielt an den Fokusdurchmesser angepasst, insbesondere ohne andere Bearbeitungsparameter ohne kausale Veranlassung mit zu verändern.

In einer bevorzugten Ausführungsform der Erfindung kann die Anpassungsfunktion f monoton steigend/fallend, linear oder polynomisch oder logarithmisch oder stetig sein.

In einer bevorzugten Ausführungsform der Erfindung kann der Laserbearbeitungskopf eine Verstelleinrichtung, insbesondere eine Verstelloptik, zur Fokusdurchmesseränderung beinhalten. Bei der Verstelleinrichtung kann es sich um eine Optik, z.B. eine Linse, z.B. ein Spiegel oder ein optisches Modul zur dynamischen Änderung des Fokusdurchmessers handeln.

In einer bevorzugten Ausführungsform der Erfindung können den erfassten Schnittspaltbreiten in einem zweiten Speichermodul Materialeigenschaften zugeordnet sein. Dies hat den technischen Effekt, dass aus den erfassten Schnittspaltbreiten mit einem Zugriff auf das zweite Speichermodul Materialeigenschaften berechnet werden können. Der Zusammenhang zwischen Materialeigenschaften und zugeordneten Schnittspaltbreiten und optional noch weiteren Parametern des Laserprozesses kann mittels Ausführung von Kalibrationsschnitten erlernt werden, so dass ein Kalibrationsmodell angelernt werden kann. Das Kalibrationsmodell kann lokal an der Lasermaschine oder global maschinenübergreifend in einer zentralen Datenbank (z.B. Cloud) abgelegt werden. In dem Kalibrationsmodell kann beispielsweise der jeweilige Einfluss von Materialdicke, Strahlabsorption (z.B. Stahl unterschiedlich wie Alu), Fokusdurchmesser, Fokuslage, Divergenz des Laserstrahls und Art des Gaswerkzeugs (insbesondere Düsentyp, Düsenabstand) auf die Schnittspaltbreite gespeichert sein

In einem weiteren Aspekt bezieht sich die Erfindung auf ein Computerprogramm mit Computerprogrammcode zur Durchführung aller Verfahrensschritte des oben näher beschriebenen Verfahrens, wenn das Computerprogramm auf einem Computer ausgeführt wird, siehe Anspruch 14.

Vorstehend wurde die Lösung der Aufgabe anhand des Verfahrens beschrieben. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf eine Vorrichtung, ein System oder auf ein Computerprogramm gerichtet sind) mit den Merkmalen weitergebildet sein, die in Zusammenhang mit dem Verfahren beschrieben oder beansprucht sind und umgekehrt. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt. Die vorstehend im Zusammenhang mit dem Verfahren beschriebenen bevorzugten Ausführungsform der Erfindung werden nicht explizit für die Vorrichtung wiederholt.

In einem weiteren Aspekt bezieht sich die Erfindung auf ein Anpassungsmodul zur dynamischen Anpassung eines Fokusdurchmessers eines Laserstrahls eines Laserbearbeitungskopfes einer Laserschneidmaschine zum Bearbeiten von, insbesondere flächigen und/oder profilierten und/oder rohrförmigen Werkstücken, siehe Anspruch 15.

In einem weiteren Aspekt bezieht sich die Erfindung auf ein System mit einer Laserschneidmaschine, siehe Anspruch 16.

In der folgenden detaillierten Figurenbeschreibung werden nicht einschränkend zu verstehende Ausführungsbeispiele mit deren Merkmalen und weiteren Vorteilen anhand der Zeichnung besprochen.

KURZE BESCHREIBUNG DER FIGUREN

Fig. 1    ist eine exemplarische Darstellung eines Schneidkopfes mit optischen Mitteln, um den Fokusdurchmesser dynamisch während des Schneidens anpassen zu können;

Fig. 2    ist eine exemplarische Darstellung eines Schneidkopfes mit einer adaptiven Optik zur Veränderung des Fokusdurchmessers;

Fig. 3    zeigt den Einfallswinkel des Laserstrahls auf die Schnittfront in Abhängigkeit von der Schneidrichtung;

Fig. 4    zeigt den Zusammenhang zwischen Strahlabsorption und Einfallswinkel;

Fig. 5    ist ein Ablaufdiagramm des Verfahrens gemäß einer bevorzugten Ausführungsform der Erfindung;

Fig. 6    ist ein Blockdiagramm mit einem Anpassungsmodul für eine Laserschneidmaschine gemäß einer bevorzugten Ausführungsform der Erfindung und

Fig. 7    zeigt exemplarisch den Zusammenhang zwischen Schnittspaltbreite und dem Vorschub.

DETAILLIERTE BESCHREIBUNG DER FIGUREN

Die vorliegende Erfindung betrifft die dynamische Anpassung des Laser Fokusdurchmessers D eines Laserstrahls, der von einem Laserbearbeitungskopf einer Laserschneidmaschine auf ein Werkstück gerichtet wird. Bei dem Werkstück kann es insbesondere um ein flächiges oder rohrförmiges oder profilförmiges Werkstück, zum Beispiel aus Metall, handeln.

Das Verfahren gliedert sich in eine:

- Konfigurationsphase, die hauptsächlich dazu bestimmt ist, ein Triggerereignis zu konfigurieren. Dazu steht eine spezifisch gestaltete Benutzeroberfläche als Mensch-Maschinenschnittstelle, human machine interface, HMI, zur Verfügung; und in eine

- Anpassungsphase, die dazu dient, den Fokusdurchmesser während des Bearbeitungsvorganges gemäß einer Anpassungsfunktion f anzupassen. Die Anpassung des Fokusdurchmessers erfolgt vorzugsweise dynamisch und während der Ausführung von Produktivschnitten gemäß einem Schneidplan.

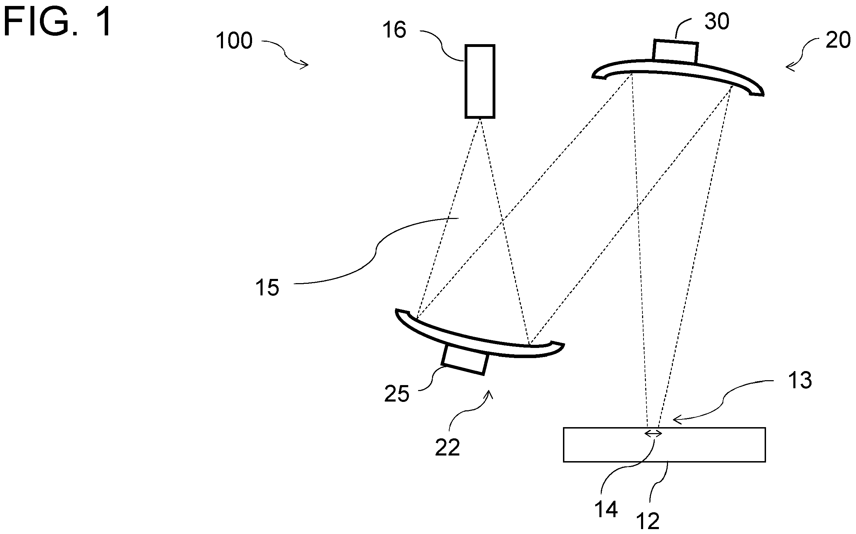

Damit der Fokusdurchmesser dynamisch angepasst werden kann, muss der Schneidkopf entsprechend konstruiert sein. **Figur 1** zeigt exemplarisch einen solchen Schneidkopf 100 mit zwei adaptiven Spiegeln 20,22. Adaptive Spiegel können mittels Aktuatoren 25,30 ihren Krümmungsradius verändern. Damit wird es möglich, dass der Durchmesser 14 und die Lage des Fokuspunktes 13 des Laserstreits 15 auf dem Werkstück 12 unabhängig voneinander verändert werden können. Das Bezugzeichen 16 kennzeichnet die Transportfaser, die die Laserstrahlung in den Schneidkopf 100 transportiert.

Alternativ zu der vorstehend beschriebenen Konstruktion, sind auch andere Konstruktionen des Schneidkopfes 100 möglich. So kann der Spiegel 20 und/oder der Spiegel 22 mit mindestens einer beweglichen und insbesondere verfahrbaren Linse ersetzt werden, wobei die Strahl- und Strahlmanipulationseigenschaften beibehalten werden können.

Alternativ oder kumulativ zu den vorstehend beschriebenen Konstruktionen zur Anpassung des Fokusdurchmessers können auch Schneidköpfe 100 verwendet werden, die anstelle des Spiegels 20 zumindest einen (oder mehrere) Spiegel einsetzten, die eine rasche laterale Strahlauslenkung erwirken können.

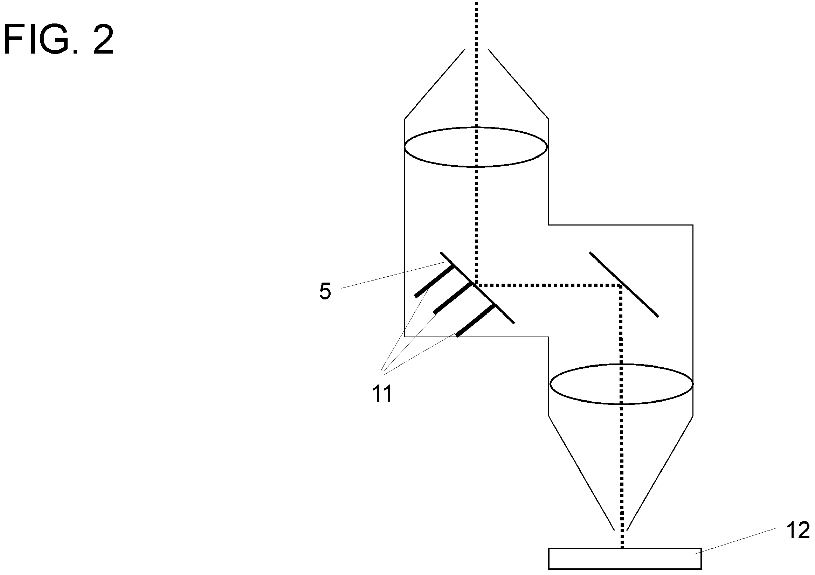

**Figur 2** zeigt eine Ausführungsform, bei der der Fokusdurchmesser des Laserstrahl, wie oben beschrieben, dynamisch angepasst werden kann. Dies wird durch dynamisch verstellbare 2-Achsenkippspiegel 5 erreicht, die mittels Piezoaktuatoren 11 ausgestattet sind. Damit lassen sich beliebige Fokusdurchmesser erzielen, wie dies am Beispiel von Figur 2 exemplarisch dargestellt ist.

Die Schnittspaltbreite ist abhängig von verschiedenen Einflussgrößen, insbesondere von der Laserstrahlbreite, der Fokuslage und der Schneidgeschwindigkeit. Letztere bewirkt, dass beim Verringern des Vorschubes, namentlich bei Anschnitt/Endschnitt, in Ecken und Radien, der Schnittspalt in unerwünschter Weise schmaler wird. Durch die Verengung des Schnittspalts kann das Prozessgas schlechter eingekoppelt werden. Bei bisherigen Systemen im Stand der Technik wird in den meisten Fällen keine Kompensation dieser Schnittspaltverringerung vorgenommen. Dies führt einerseits durch erhöhte Gratbildung zu einer reduzierten Schneidqualität und andererseits zu einer verringerten Teilegenauigkeit. Diese negativen Effekte können durch die vorliegende Erfindung vermieden werden.

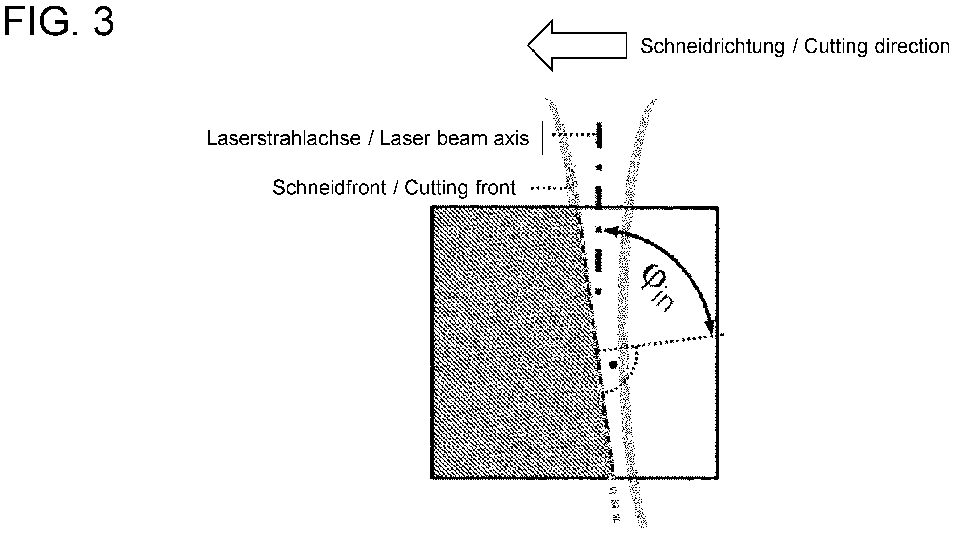

Die Beobachtung, dass mit reduziertem Vorschub die Schnittspaltbreite abnimmt, kann physikalisch so erklärt werden, dass bei reduziertem Vorschub (Geschwindigkeit des Schneidkopfes, der über Antriebsachsen entlang einer Trajektorie bewegt wird) der Laserstrahl flacher auf die Schnittkante auftrifft und dadurch die Laserstrahlabsorption im Material geringer ausfällt. **Figur 3** zeigt den Sachverhalt, wobei der Einfallswinkel φin, welcher die Steilheit des Laserstrahlauftreffens auf die Schnittfront beschreibt, abhängig vom Vorschub ist. Wie man sich leicht vorstellen kann, wird der Winkel cpin grösser (bis hin zu nahezu 90 deg), wenn der Vorschub kleiner wird. Ein größerer Einfallswinkel bedeutet aber auch, dass die Absorption des Laserstrahls auf der Schnittkante abnimmt.

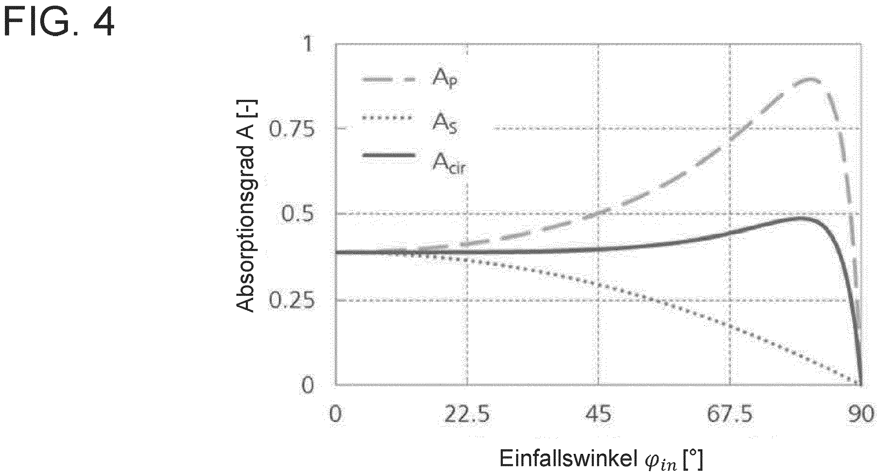

**Figur 4,** zeigt in der durchgezogenen Linie qualitativ die Absorption des Laserstrahles auf einem Metallblech. Ist der Vorschub gering und der Winkel cpin nahezu 90deg, so ist die Absorption merklich kleiner als wenn bei hohem Vorschub cpin gegen 80 deg hin sein kann. Die vergrößerte Absorption bei erhöhtem Vorschub hat jedoch nicht nur in Schneidrichtung einen Effekt, sondern auch quer dazu, was bewirkt, dass bei erhöhtem Vorschub die Schnittfuge breiter wird als bei kleiner Geschwindigkeit.

Kann nun der Schnittspaltbreitenverringerung, induziert durch verringerten Vorschub, mit einem breiteren Laserstrahl entgegengewirkt werden, so können beide Nachteile, d.h. die reduzierte Teilegenauigkeit und die verminderte Schneidqualität, insbesondere bei Anschnitt/Endschnitt und in Ecken und Radien, reduziert bzw. eliminiert werden. Die Beeinflussung der Schnittspaltbreite über den Durchmesser des Laserstrahls und die freie Wahl der Fokuslage ermöglicht zudem maximal rechtwinklige Schnittflächen.

Im Weiteren sei erwähnt, dass Konturfehler (Abweichungen zwischen Soll- und Ist-Kontur) durch eine hochdynamische Anpassung der Laserstrahlbreite kompensiert und/oder zumindest reduziert werden können. Konturfehler haben verschiedenste Ursachen, wie beispielsweise Reibung, Umkehrspiel, Nachgiebigkeit des mechanischen Systems (Trägheit), Vibrationen von Maschinenkomponenten. Diese werden, Stand heute, mittels der Positionsanpassung der Maschinenachsen reduziert/kompensiert. Eine Kompensation via Laserstrahlbreite ist jedoch genauer als via Anpassung der Positionsdaten der Aktuatoren. Zudem ist zu erwarten, dass auch höher-frequente Konturfehler - aufgrund der hohen Dynamik der verstellbaren Umlenkspiegel - kompensiert und/oder reduziert werden können. In einer vorteilhaften Weiterbildung können Konturfehler gemessen und/oder mit einem Modell eines maschinellen Lernsystems (ML-Modell) geschätzt werden.

Auch beim Brennschneiden sind vorteilhafte Verfahren denkbar, welche dank dynamischer Anpassung der Laserstrahlbreite umgesetzt werden können. So treten beim Beschleunigen oft Riefen auf. Während dieses Beschleunigungsvorganges kann durch dynamische Anpassung des Fokusdurchmessers der Riefenbildung entgegengewirkt werden, was eine deutlich verbesserte Schnittkantenqualität bewirkt. Die Riefenbildung kann sensorisch gemessen werden. Alternativ oder kumulativ kann die Riefenbildung und/oder der Zusammenhang mit der Beschleunigung mit einem weiteren ML-Modell geschätzt werden.

Die erfindungsgemäß anpassbare Schnittspaltbreite mittels Adaption der Laserstrahlbreite hat noch weitere Vorteile. So können kleine Konturen (z.B. kleine Löcher) mit breiterem Schnittspalt geschnitten werden, was ein sicheres Herausfallen der kleinen Konturen begünstigt. Dies hat den Hintergrund, dass kleine Schnittfugen dazu tendieren, zu verschweißen oder zu verkeilen, was ein späteres Absortieren der geschnittenen Teile erschwert oder gar unmöglich macht.

Im Weiteren kann eine einstellbare Schnittspaltbreite den Vorteil haben, dass eine sichere automatische Sortierung und Abräumung nach dem Schneiden gewährleistet ist. Sind die Teile mit breitem Schnittspalt geschnitten, so ist eine fehlerfreie automatische Sortierung/Abräumung begünstigt.

Einstechen:

Bevor ein Teil geschnitten werden kann, muss mit dem Laser eingestochen werden. Insbesondere bei dickeren Teilen werden am gleichen Ort meistens mehrere Laserpulse auf das Material gegeben, bis ein Durchstich erreicht ist. Erst danach kann mit dem Schneiden der Kontur begonnen werden. Üblicherweise werden während des Einstechens die Laserleistung, die Fokuslage, der Düsenabstand, der Gasdruck, die Pulsbreite, die Pulsfrequenz und die Einstechdauer verändert. Nur über die Fokuslage hat man Einfluss auf das Strahlwerkzeug. Mit der erfindungsgemäßen Möglichkeit, den Fokusdurchmesser über die Einstechfunktion h anzupassen, eröffnen sich viele neue vorteilhafte Einstechverfahren. Dabei legt die Einstechfunktion h fest, wie der Fokusdurchmesser D über den Verlauf des Einstechprozesses unter Bezugnahme auf die Materialeigenschaften des zu schneidenden Materials, besonders unter Bezugnahme auf die Materialdicke, zu bestimmen bzw. zu verändern ist.

In einer bevorzugten Ausführungsform der Erfindung kann die Einstechfunktion h so bestimmt werden, dass der Fokusdurchmesser D während des Einstechvorganges iterativ geändert wird und insbesondere kontinuierlich vergrößert wird.

Zum Beispiel kann die Einstechfunktion h, derart konfiguriert sein, dass bei einem dickeren Blech erst die Fokuslage auf der Oberseite des Bleches gelegt und der Strahldurchmesser klein gewählt wird. Während des Pulsens wird nun der Strahldurchmesser sukzessive grösser gewählt, bis ein erster kleiner Krater entstanden ist. Danach kann die Fokuslage etwas tiefer ins Blech gelegt und wieder ein kleiner Strahldurchmesser gewählt werden. Erneut wird während des Pulsens der Strahldurchmesser wieder kontinuierlich vergrößert. Das Vorgehen wird wiederholt, bis der Durchstich erfolgreich abgeschlossen ist. Dieses Vorgehen eignet sich besonders für Blechdicken ab 30mm. Vorteilhaft ist dabei, dass die Einstiche tendenziell kleinere Auswürfe produzieren und schneller eingestochen werden kann. Bei Blechdicken unter 30mm stellt das oben beschriebene Verfahren eine Option zum Kreiseinstich dar, wodurch Einstiche mit minimalem Auswurf erreicht werden können.

Ein anderer Vorteil der Strahldurchmesser-Adaption ist, dass ermöglicht wird, die Einstichstelle vor dem eigentlichen Einstechen mit großem Strahldurchmesser und moderater Laserleistung (100 - 700W) großflächig aufzuwärmen. Besonders beim Einstechen mit Sauerstoff können dadurch unliebsame Einstechspritzer bei Laser-Blech-Erstkontakt verhindert werden. Nach der flächigen Aufwärmphase von typischerweise 0.05s kann mit kleinerem Fokusdurchmesser wie gewohnt eingestochen werden.

Gravieren:

Etliche Teile werden mit dem Prozesslaser vor oder nach dem Schneiden auch graviert. Sollen flächige Gravuren angebracht werden, so ist mit einem kleinen Laserstrahl der benötigte Zeitbedarf beträchtlich.

Kann der Laserstrahl im Durchmesser jedoch verändert werden, so kann bei flächigen Gravuren mit großem Laserstrahl merklich Zeit eingespart werden. Und filigrane Gravuren sind nach wie vor gut machbar, indem der Laserstrahl im Durchmesser wieder kleiner gewählt wird. Generell werden die Gravuren bei optimal gewähltem Fokusdurchmesser auch exakter.

Mikrosteg-Schweißen:

Schweissstege werden vor allem im Dickblechbereich ab 4 mm eingesetzt, wenn die Dicke des Materials das Herausbrechen des Materials erschwert oder verhindert. Schweissstege werden auf die Schnittspalte einer bereits geschnittenen Kontur gesetzt. Es versteht sich von selbst, dass sich das Strahlwerkzeug, das gerade eben dazu genutzt wurde, das Material zu trennen sich schlecht dazu eignet, das Material wieder zu verbinden, weil der Spotdurchmesser beim Schweißen grösser sein sollte. Optimaler Weise beträgt der Spotdurchmesser auf dem Blech mehr als 0.2mm.

Die dynamische Anpassung der Spotgrösse bzw. des Fokusdurchmessers ermöglicht deshalb deutlich bessere Schweißresultate.

Eine weitere vorteilhafte Ausführungsform ist darin zu sehen, dass zum Beispiel eine Auswahl von vorkonfigurierbaren Schneidparametern, wie z.B. Gasdruck, Fokuslage, etc. synchron zum Fokusdurchmesser variiert werden können.

Erkennen von Materialeigenschaften:

Durch Ausführen von Kalibrationsschnitten kann ein Zusammenhang zwischen Schnittspaltbreite, Vorschub und optional Einfallswinkel und/oder Absorptionsgrad und/oder damit einhergehender Änderung der Absorption in einem ersten und/oder zweiten Speichermodul gespeichert werden. Vorzugsweise kann der Absorptionskoeffizient in Abhängigkeit von dem Einfallswinkel $\varphi$in gespeichert werden. Da, wie erwähnt, die sich einstellende Schnittspaltbreite abhängig ist von der Vorschubgeschwindigkeit, infolge Änderung des Einfallswinkels $\varphi$in zwischen Laserstrahlachse und Schnittfront (vgl. Fig. 4) und somit Änderung des Absorptionsgrades (Fig. 4), kann mittels Ausführung von Kalibrationsschnitten mit verschiedenen definierten Vorschubgeschwindigkeiten und einem nachfolgenden Messen der sich ergebenden Schnittspaltbreiten auf die Materialeigenschaften geschlossen werden, da der Absorptionsgrad weiter auch von der Materialart abhängig ist. Mit Hilfe einer dynamischen Fokusdurchmesserveränderung kann das Vorgehen bei den Kalibrationsschnitten wesentlich vereinfacht werden: beim Schneiden eines einzelnen Schnitts mit verändertem Vorschub kann mittels dynamischer Anpassung der Spotgrösse bzw. des Fokusdurchmessers und gleichzeitiger Kamerabeobachtung eine für die Materialart charakteristische Kalibrationskurve erstellt werden. Die charakteristische Kalibrationskurve und/oder der ermittelte Zusammenhang zwischen Vorschub und Materialeigenschaften kam in den ersten und/oder zweiten Speichermodul kontinuierlich in aktualisierter Form gespeichert werden und/oder auf einer Benutzerschnittstelle UI ausgegeben werden. Über den Vorschub kann unter Zugriff auf den Schneidplan eine örtliche Referenzierung auf die Schneidgeometrie ausgeführt werden. Somit wird es möglich, aus den Kalkulationsschnitten ortsaufgelöst die Materialeigenschaften abzuleiten.

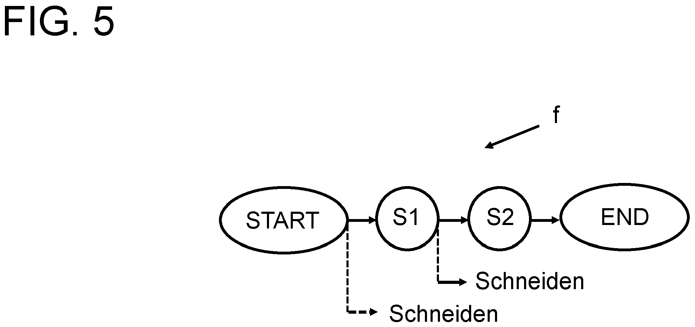

**Fig. 5** zeigt ein Ablaufdiagram des Verfahrens zur dynamischen Anpassung des Fokusdurchmessers D des Laserstrahls, der von dem Laserbearbeitungskopf 100 der Laserschneidmaschine L auf das Werkstück ausgesendet wird. Nach dem Start des Verfahrens wird in Schritt S1 geprüft, ob ein voll konfigurierbares Triggerereignis eingetreten ist. Die Konfiguration des Triggerereignis kann in einer Konfigurationsphase, die der Betriebsphase mit dem Laserschneidprozess vorangeht, über die Benutzerschnittstelle UI erfolgen. Wenn festgestellt wurde, dass das Triggerereignis erfüllt ist, wird in Schritt S2 die in dem ersten Speichermodul MEM1 und/oder zweiten Speichermodul MEM2 gespeicherte Anpassungsfunktion f zur Anpassung des Fokusdurchmessers D ausgeführt. Wie in Figur 5 durch den nach rechts weisenden Pfeil mit durchgezogener Linie dargestellt, erfolgt die Anpassung des Fokusdurchmessers D während des Schneidvorganges bzw. parallel zum Schneidvorgang. Optional kann auch der Schritt S1 zur Überprüfung, ob das konfigurierte Triggerereignis eingetreten ist oder nicht, parallel zum Schneidvorgang ausgeführt werden. Dies ist in Figur 5 durch den gepunktet dargestellten Pfeil repräsentiert.

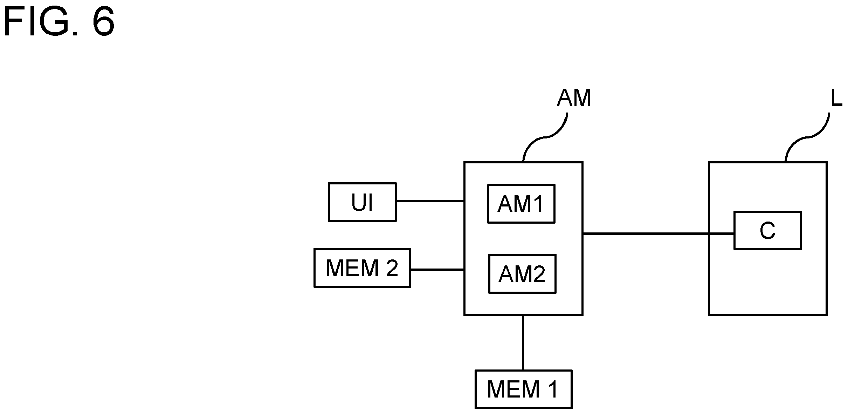

**Fig. 6** ist ein Blockdiagramm des Anpassungsmoduls AM, dass zum Ausführen des computerimplementierten Verfahrens zur dynamischen Anpassung des Fokusdurchmessers D (wie vorstehend beschrieben) bestimmt ist. Das Anpassungsmodul kann als elektronischer Baustein (Field Programmable Gate Array, FPGA oder einem application-specific integrated circuit, ASIC) ausgebildet sein. Das Anpassungsmodul AM umfasst zumindest einen Prüfbaustein AM1, der dazu ausgebildet ist, zu prüfen, ob das vorkonfigurierte Triggerereignis eingetreten ist. Das Anpassungsmodul AM umfasst einen Prozessor AM2, der dazu bestimmt ist, die Anpassungsfunktion f zur Anpassung des Fokusdurchmessers D auszuführen. Dazu kann der Prozessor AM2 auf das erste Speichermodul MEM1 und/oder das zweite Speichermodul MEM2 zugreifen, in der die Anpassungsfunktion f abgelegt sein kann. Alternativ kann die Anpassungsfunktion f auch direkt auf den Prozessor AM2 gespeichert sein. In einer vorteilhaften Weiterbildung kann die Anpassungsfunktion f parametrisierbar sein. Dazu können die Parameter über die Benutzerschnittstelle UI vom Anwender eingegeben werden. Die eingegebenen Parameter werden über entsprechende Schnittstellen an den Prozessor AM2 weitergeleitet. Wie in Figur 6 dargestellt, kann das Anpassungsmodul AM als separate Instanz (elektronische Einheit bzw. Hardwaremodul) über eine entsprechende Schnittstelle mit der Laserschneidmaschine L verbunden sein. Üblicherweise ist ein Controller C (z.B. als Microcontrollersystem ausgebildet) zur Steuerung des Laserschneidprozesses auf der Laserschneidmaschine L ausgebildet. In diesem Fall kann das Anpassungsmodul AM direkt mit dem Controller C in Datenaustausch stehen. Der Datenaustausch ist vorzugsweise bidirektional, sodass das Anpassungsmodul AM einerseits Steueranweisungen an den Controller C übermitteln kann, um die Anpassungsfunktion f über den Controller C ausführen zu lassen, und so dass das Anpassungsmodul AM auch die zur Anpassung des Fokusdurchmessers relevanten Parameter des Schneidprozesses vom Controller C anfordern kann, wie insbesondere den Vorschub und/oder sensorisch gemessene Parameter, wie beispielsweise die Schnittspaltbreite.

In einer alternativen Ausführungsform kann das Anpassungsmodul AM auch direkt auf dem Laser L und insbesondere auf dem Controller C des Lasers L bzw. des Schneidkopfes implementiert sein.

Das Anpassungsmodul AM steht in Datenaustausch mit dem ersten Speichermodul MEM1, mit dem zweiten Speichermodul MEM2 und/oder mit einer Benutzerschnittstelle UI. Die Benutzerschnittstelle UI kann insbesondere zur Konfiguration des Triggerereignisses verwendet werden.

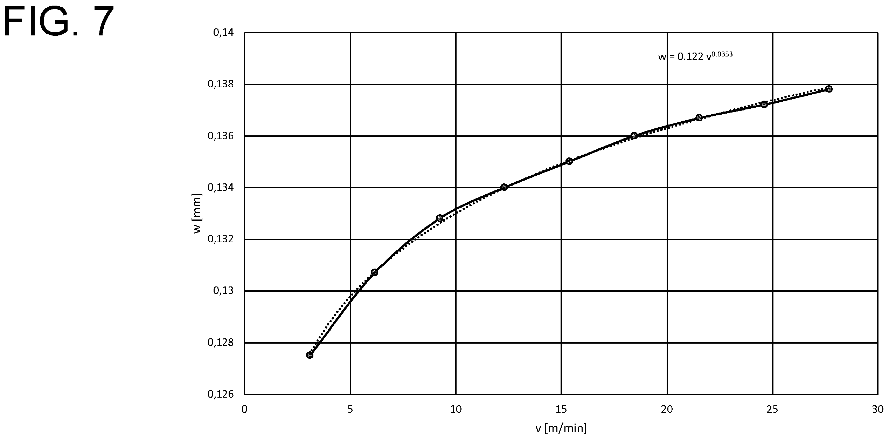

**Fig. 7** zeigt exemplarisch den Zusammenhang zwischen der Schnittspaltbreite w und dem Vorschub v bzw. der Schneidgeschwindigkeit. In der durchgezogenen Kurve ist eine simulierte Abhängigkeit dargestellt und die gepunktete Kurve repräsentiert eine Anpassung bzw. einen Fit. Fig. 7 zeigt exemplarisch den funktionalen Zusammenhang zwischen Schnittspaltbreite und Vorschub. Daraus ist ersichtlich, dass ein dynamisches Anpassen des Fokusdurchmessers vorteilhaft und nötig ist, um die (aufgrund von Vorschub-Unterschieden) unterschiedlichen Schnittspaltbreiten kompensieren zu können. Im Falle eines Modells zur Steuerung des Fokusdurchmessers kann für das genannte Beispiel (2mm Stahl,...) die vorliegende Kurve verwendet werden.

In Fig. 7 ist eine berechnete Schnittspaltbreite w in Abhängigkeit des Vorschubes v für 2mm Baustahl gezeigt. Dabei wurde angenommen, dass die Schneideffizienz konstant bleiben soll, d.h. die Laserleistung in Abhängigkeit des Vorschubes ebenfalls reduziert wird. Weitere Schneidparameter in der Berechnung sind Max. Laserleistung= 5kW, Düsendurchmesser=45mm, Düsenabstand=0.3mm, Gasdruck=10bar, Fokuslage = Mitte des Bleches, Schneidgas = $N_2$.

Der Schutzbereich der vorliegenden Erfindung ist durch die Ansprüche gegeben.

Für einen Fachmann ist es insbesondere offensichtlich, dass die Erfindung nicht nur für das Schneiden an sich angewendet werden kann, sondern auch für andere Schneidregimes, wie das Einstechen, Gravieren, Mikrostegschweißen etc. Des Weiteren können die Bauteile des Anpassungsmoduls AM auf mehreren physikalischen Produkten verteilt realisiert werden kann.

**Patentansprüche**

1. Computer-implementiertes Verfahren zur dynamischen Anpassung eines Fokusdurchmessers (D) eines Laserstrahls eines Laserbearbeitungskopfes (100) einer Laserschneidmaschine (L) zum Bearbeiten von, insbesondere flächigen oder profilierten oder rohrförmigen, Werkstücken, **gekennzeichnet durch** folgende Schritte:

   - Prüfen (S1), ob ein vorkonfigurierbares Triggerereignis vorliegt, und bejahendenfalls:
   - Ausführen (S2) einer Anpassungsfunktion (f) zur Anpassung des Fokusdurchmessers (D) während eines Bearbeitungsvorganges entlang einer Bahn, die der Laserbearbeitungskopf (100) abfährt, wobei die Anpassungsfunktion (f) zur Anpassung des Fokusdurchmessers (D) unabhängig von anderen Bearbeitungsparametern oder deren Veränderung ausgeführt wird,
   - Anpassung des Fokusdurchmessers (D) während des Bearbeitungsvorgangs entlang der Bahn entsprechend dem Ergebnis der Ausführung (S2).

2. Verfahren nach Anspruch 1, bei dem als Triggerereignis ein Erfassen einer Veränderung der Schnittspaltbreite konfiguriert ist und wobei die Anpassungsfunktion (f) so gewählt wird, dass durch den derart angepassten Fokusdurchmesser (D) die erfasste Veränderung der Schnittspaltbreite kompensiert wird.

3. Verfahren nach dem unmittelbar vorangehenden Anspruch, bei dem das Erfassen einer Veränderung der Schnittspaltbreite direkt und sensorisch erfolgt und insbesondere mit einem optischen Sensor.

4. Verfahren nach einem der vorangehenden Ansprüche 2 oder 3, bei dem das Erfassen einer Veränderung der Schnittspaltbreite indirekt erfolgt, indem der Vorschub des Schneidkopfes (100) ermittelt wird und ein Zugriff auf ein erstes Speichermodul (MEM1) erfolgt, indem eine Zuordnung zwischen Vorschub und Schnittspaltbreite gespeichert ist.

5. Verfahren nach einem der vorangehenden Ansprüche, bei dem als Triggerereignis ein Ausführen eines Anschnitts und/oder eines Endschnitts konfiguriert ist.

6. Verfahren nach einem der vorangehenden Ansprüche, bei dem als Triggerereignis das Ausführen eines Einstechprozesses konfiguriert ist und bei dem vor dem Einstechen eine Einstechfunktion (h) zur Vergrößerung des Fokusdurchmessers (D) auf einen Wert ausgeführt wird, der in einem vorkonfigurierbaren Bereich liegt und dazu dient, eine Einstichstelle aufzuwärmen, und anschließend für das Einstechen ein vordefinierbaren Einstech-Fokusdurchmesser angewendet wird.

7. Verfahren nach einem der vorangehenden Ansprüche, bei dem als Triggerereignis das Ausführen eines Gravierprozesses konfiguriert ist, insbesondere eines flächigen Gravierprozesses, wobei für ein flächiges Gravieren der Fokusdurchmesser (D) erhöht und bei feinen Gravuren der Fokusdurchmesser (D) verringert wird.

8. Verfahren nach einem der vorangehenden Ansprüche, bei dem als Triggerereignis ein Mikrostegschweißen von geschnittenen Teilen konfiguriert ist.

9. Verfahren nach einem der vorangehenden Ansprüche, bei dem als Triggerereignis ein Erfassen von Konturfehlern und/oder eine Eintrittswahrscheinlichkeit von Konturfehlern konfiguriert ist/sind.

10. Verfahren nach einem der vorangehenden Ansprüche, bei dem einer der anderen Bearbeitungsparameter eine Fokuslage ist.

11. Verfahren nach einem der vorangehenden Ansprüche, bei dem die Anpassungsfunktion (f) monoton steigend/fallend, linear oder polynomisch oder logarithmisch oder stetig ist.

12. Verfahren nach einem der vorangehenden Ansprüche, bei dem der Laserbearbeitungskopf (100) eine Verstelleinrichtung, insbesondere eine Verstelloptik zur Fokusdurchmesseränderung, beinhaltet.

13. Verfahren nach einem der vorangehenden Ansprüche, bei dem in einem zweiten Speichermodul (MEM2) den erfassten Schnittspaltbreiten Materialeigenschaften zugeordnet sind, die auf einer Benutzerschnittstelle (UI) ausgegeben werden können, und insbesondere in Bezug auf jeweils einen Punkt einer abzufahrenden Geometrie.

14. Computerprogramm mit Computerprogrammcode zur Durchführung aller Verfahrensschritte des Verfahrens gemäß einem der vorangehenden Verfahrensansprüche, wenn das Computerprogramm auf einem Computer ausgeführt wird.

15. Anpassungsmodul (AM) zur dynamischen Anpassung eines Fokusdurchmessers (D) eines Laserstrahls eines Laserbearbeitungskopfes (100) einer Laserschneidmaschine (L) zum Bearbeiten von, insbesondere flächigen oder profilierten oder rohrförmigen, Werkstücken, das zur Ausführung des Verfahrens gemäß einem der vorangehenden Patentansprüche ausgebildet ist, mit:

- Einem Prüfbaustein (AM1), der zum Prüfen (S1) ausgebildet ist, ob ein vorkonfigurierbares Triggerereignis vorliegt, und

**gekennzeichnet durch**:

- Einem Prozessor (AM2), der - falls der Prüfbaustein ein vorkonfigurierbares Triggerereignis erkannt hat - zum Ausführen (S2) einer Anpassungsfunktion (f) bestimmt ist zur Anpassung des Fokusdurchmessers (D) während eines Bearbeitungsvorganges entlang einer Bahn, die der Laserbearbeitungskopf (100) abfährt, wobei die Anpassungsfunktion (f) zur Anpassung des Fokusdurchmessers (D) unabhängig von anderen Bearbeitungsparametern oder deren Veränderung ausgeführt wird.

16. System mit einer Laserschneidmaschine (L), die in Datenaustausch steht mit einem Anpassungsmodul (AM) gemäß dem unmittelbar vorangehenden Anspruch oder dieses umfasst.

**Claims**

1. A computer-implemented method for dynamically adjusting a focus diameter (D) of a laser beam of a laser machining head (100) of a laser cutting machine (L) for machining workpieces, in particular planar or profiled or tubular workpieces, **characterised by** the following steps:

- checking (S1) whether there is a preconfigurable trigger event and, if so:
- executing (S2) an adjustment function (f) for adjusting the focus diameter (D) during a machining process along a path that the laser machining head (100) travels, the adjustment function (f) for adjusting the focus diameter (D) being executed independently of other machining parameters or a change in them,
- adjusting the focus diameter (D) during the machining process along the path according to the result of the execution (S2).

**2.** The method according to claim 1, wherein a detection of a change in the cutting gap width is configured as the trigger event and wherein the adjustment function (f) is selected such that the detected change in the cutting gap width is compensated for by the focus diameter (D) adjusted in this way.

**3.** The method according to the immediately preceding claim, wherein the detection of a change in the cutting gap width takes place directly and by sensor and in particular with an optical sensor.

**4.** The method according to one of the preceding claims 2 or 3, wherein the detection of a change in the cutting gap width takes place indirectly by determining the advance of the cutting head (100) and accessing a first memory module (MEM1) in which an association between the feed and the cutting gap width is stored.

**5.** The method according to one of the preceding claims, wherein an execution of a first cut and/or a final cut is configured as the trigger event.

**6.** The method according to one of the preceding claims, wherein the execution of a piercing process is configured as a trigger event and in which, before piercing, a piercing function (h) is executed to enlarge the focus diameter (D) to a value which lies in a preconfigurable range and is used to heat up a piercing site, and then a predefinable piercing focus diameter is applied for piercing.

**7.** The method according to one of the preceding claims, wherein the execution of an engraving process, in particular a planar engraving process, is configured as a trigger event, wherein the focus diameter (D) is increased for planar engraving and the focus diameter (D) is reduced for fine engravings.

**8.** The method according to one of the preceding claims, wherein a micro-bridge welding of cut parts is configured as the trigger event.

**9.** The method according to one of the preceding claims, wherein a detection of contour errors and/or a probability of occurrence of contour errors is/are configured as a trigger event.

**10.** The method according to one of the preceding claims, wherein one of the other machining parameters is a focus position.

**11.** The method according to one of the preceding claims, wherein the adjustment function (f) is monotonically increasing/decreasing, linear or polynomial or logarithmic or continuous.

**12.** The method according to one of the preceding claims, wherein the laser machining head (100) includes an adjustment device, in particular an adjustment optical unit for changing the focus diameter.

**13.** The method according to one of the preceding claims, wherein in a second memory module (MEM2) material properties are assigned to the detected cutting gap widths and can be output on a user interface (UI), and in particular with respect to a point of a geometry to be travelled.

**14.** A computer program product having a computer program code for carrying out all the method steps of the method according to one of the preceding method claims when the computer program is executed on a computer.

**15.** An adjustment module (AM) for dynamically adjusting a focus diameter (D) of a laser beam of a laser machining head (100) of a laser cutting machine (L) for machining workpieces, in particular planar or profiled or tubular workpieces, which is designed to carry out the method according to one of the preceding claims, comprising:

   - A check module (AM1), which is designed to check (S1) whether there is a preconfigurable trigger event, and **characterised by**:
   - a processor (AM2) which - if the check module has identified a preconfigurable trigger event - is intended to execute (S2) an adjustment function (f) for adjusting the focus diameter (D) during a machining process along a path that the laser machining head (100) travels, wherein the adjustment function (f) for adjusting the focus diameter (D) is executed independently of other machining parameters or a change in them.

**16.** A system having a laser cutting machine (L) which is in data exchange with or comprises an adjustment module (AM) according to the immediately preceding claim.

**Revendications**

1. Procédé mis en oeuvre par ordinateur d'ajustement dynamique d'un diamètre focal (D) d'un faisceau laser d'une tête d'usinage laser (100) d'une machine de coupe laser (L) pour l'usinage de pièces, en particulier plates ou profilées ou tubulaires, **caractérisé par** les étapes suivantes :

   - vérification (S1) établissant si un événement déclencheur préconfigurable existe, et si oui :
   - réalisation (S2) d'une fonction d'ajustement (f) pour l'ajustement du diamètre focal (D) pendant un processus d'usinage le long d'un trajet parcouru par la tête d'usinage laser (100), dans lequel la fonction d'ajustement (f) pour l'ajustement du diamètre focal (D) est réalisée indépendamment d'autres paramètres d'usinage ou de leur modification,
   - ajustement du diamètre focal (D) pendant le processus d'usinage le long du trajet en fonction du résultat de la réalisation (S2).

2. Procédé selon la revendication 1, dans lequel une détection d'une modification de la largeur de la fente de coupe est configurée comme événement déclencheur et dans lequel la fonction d'ajustement (f) est sélectionnée de telle sorte que la modification détectée de la largeur de la fente de coupe est compensée par le diamètre focal (D) ainsi ajusté.

3. Procédé selon la revendication immédiatement précédente, dans lequel la détection d'une modification de la largeur de la fente de coupe s'effectue directement et de manière sensorielle et en particulier au moyen d'un capteur optique.

4. Procédé selon l'une quelconque des revendications précédentes 2 ou 3, dans lequel la détection d'une modification de la largeur de la fente de coupe s'effectue indirectement en déterminant l'avance de la tête de coupe (100) et en accédant à un premier module de mémoire (MEM1), dans lequel est mémorisée une association entre l'avance et la largeur de la fente de coupe.

5. Procédé selon l'une quelconque des revendications précédentes, dans lequel la réalisation d'une coupe initiale et/ou d'une coupe finale est configurée comme événement déclencheur.

6. Procédé selon l'une quelconque des revendications précédentes, dans lequel la réalisation d'un processus de perçage est configurée comme événement déclencheur et dans lequel avant le perçage, une fonction de perçage (h) est réalisée pour augmenter le diamètre focal (D) jusqu'à une valeur qui se situe dans une plage préconfigurable et sert à réchauffer un site de perçage et ensuite un diamètre focal de ponction prédéfinissable est utilisé pour le perçage.

7. Procédé selon l'une quelconque des revendications précédentes, dans lequel la réalisation d'un processus de gravure est configurée comme événement déclencheur, en particulier un processus de gravure à plat, dans lequel le diamètre focal (D) est augmenté pour une gravure à plat et le diamètre focal (D) est réduit pour les gravures fines.

8. Procédé selon l'une quelconque des revendications précédentes, dans lequel le micro-soudage par barrettes de pièces découpées est configuré comme événement déclencheur.

9. Procédé selon l'une quelconque des revendications précédentes, dans lequel une détection d'erreurs de contour et/ou une probabilité d'apparition d'erreurs de contour est/sont configurée(s) comme événement déclencheur.

10. Procédé selon l'une quelconque des revendications précédentes, dans lequel l'un des autres paramètres d'usinage est une position focale.

11. Procédé selon l'une quelconque des revendications précédentes, dans lequel la fonction d'ajustement (f) est croissante/décroissante de manière monotone, linéaire ou polynomiale ou logarithmique ou continue.

12. Procédé selon l'une quelconque des revendications précédentes, dans lequel la tête d'usinage laser (100) contient un dispositif de réglage, en particulier une optique de réglage pour modifier le diamètre focal.

13. Procédé selon l'une quelconque des revendications précédentes, dans lequel des propriétés de matériaux sont attribuées aux largeurs de fente de coupe détectées dans un second module de mémoire (MEM2), lesquelles propriétés peuvent être éditées sur une interface utilisateur (UI), en particulier en relation avec un point respectif d'une géométrie à parcourir.

14. Programme informatique comportant un code de programme informatique pour réaliser toutes les étapes du procédé selon l'une quelconque des revendications de procédé précédentes lorsque le programme informatique est exécuté sur un ordinateur.

15. Module d'ajustement (AM) pour l'ajustement dynamique d'un diamètre focal (D) d'un faisceau laser d'une tête d'usinage laser (100) d'une machine de coupe laser (L) pour l'usinage de pièces, en particulier plates ou profilées ou tubulaires, qui est conçu pour exécuter le procédé selon l'une quelconque des revendications précédentes, comportant :

- un module de vérification (AM1), qui est conçu pour vérifier (S1) si un événement déclencheur préconfigurable existe, et **caractérisé par** :
- un processeur (AM2) qui, si le module de vérification a reconnu un événement déclencheur préconfigurable, est destiné à exécuter (S2) une fonction d'ajustement (f) pour l'ajustement du diamètre focal (D) pendant un processus d'usinage le long d'un trajet parcouru par la tête d'usinage laser (100), dans lequel la fonction d'ajustement (f) pour l'ajustement du diamètre focal (D) est réalisée indépendamment des autres paramètres d'usinage ou de leur modification.

16. Système comportant une machine de coupe laser (L) qui est en liaison d'échange de données avec un module d'ajustement (AM) selon la revendication immédiatement précédente ou qui le comprend.

FIG. 1

EP 4 144 474 B1

EP 4 144 474 B1

FIG. 2

# FIG. 3

Schneidrichtung / Cutting direction

Laserstrahlachse / Laser beam axis

Schneidfront / Cutting front

$\varphi_{in}$

EP 4 144 474 B1

FIG. 4

EP 4 144 474 B1

EP 4 144 474 B1

# FIG. 5

FIG. 6

EP 4 144 474 B1

FIG. 7

EP 4 144 474 B1

$w = 0.122\ v^{0.0353}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3747588 A1
- US 2002017512 A1
- US 2016096239 A1
- US 2019232434 A1

**In der Beschreibung aufgeführte Nicht-Patentliteratur**

- Influence of Process Parameters in Laser Piercing. *Applied Sciences,* August 2019, vol. 9 (16), 3231
- **BRÜGMANN, M.H. ; FEURER, T.** Theoretical Analysis of Laser Cutting of Metals at 1 and 10um wavelength. *Asers Manuf. Conf. 2015,* 2015, 10